# FASCICULE DE BREVET EUROPEEN

(11) **EP 0 616 869 B1**
(45) Date de publication et mention de la délivrance du brevet: **04.06.1997**
(21) Numéro de dépôt: 94420097.1
(22) Date de dépôt: 22.03.1994
(51) Int. Cl.: B23K 9/28

(54) **Pince porte-électrode multidirectionnelle pour soudure à l'arc avec levier intégré dans le manche**
Mehrrichtungsklemmme eines Lichtbogenelektrodenhalters mit einem in den Griff eingefügten Hebel
Multi-way electrode holder jaws usable for arc welding with a lever inserted in the handle

(30) Priorité: 23.03.1993 FR 9303554
(43) Date de publication de la demande: 28.09.1994
(73) Titulaire: SOUDO METAL S.A.R.L., F-39400 Morez (FR)
(72) Inventeur: Benoit, Gérard, F-39400 Morez (FR)
(74) Mandataire: Kiehl, Hubert

(56) Documents cités:
- EP-A- 0 080 552
- CH-A- 327 379
- US-A- 3 659 072

## Description

L'invention a pour objet une pince porte-électrode pour soudage à l'arc, dans laquelle la partie intérieure conductrice tenant l'électrode est isolée de l'extérieur afin de pouvoir poser cette pince sur la table de travail également conductrice et mise à la masse, et ce sans risque d'apparition de court-circuit électrique.

Le document EP-A-0 080 552 décrit une telle pince dans laquelle la mâchoire de maintien de l'électrode de soudure est logée à l'intérieur d'un manchon d'amenée concentrique de gaz inerte. Les leviers d'actionnement de la mâchoire et d'apport d'énergie électrique sont disposés à l'extérieur de ce manchon, plus précisément de part et d'autre d'un axe traversant ce manchon par l'intermédiaire de gaines isolantes, cet axe étant serti d'une part sur la mâchoire et d'autre part aux leviers.

Ces leviers ne sont donc pas isolés, et risquent de provoquer des arcs électriques destructeurs en cas de contact avec des objets conducteurs reliés à la masse. De plus, l'apport d'énergie électrique se fait au travers de l'axe, ce qui constitue une restriction de surchauffe inutile. Enfin, cette pince est très volumineuse et ne permet pas d'aller souder dans de petits endroits difficiles d'accès.

Le document CH-A-327 379 décrit une pince déjà plus petite et mieux isolée permettant, moyennant certaines précautions, de la poser sur la table et d'effectuer des travaux dans des endroits étroits.

Cette pince porte-électrode pour soudage à l'arc comprend, à l'intérieur d'un manchon isolant d'une seule pièce, une pièce conductrice interne dont la partie arrière est destinée à recevoir un câble électrique d'amenée de courant. Sur cette pièce conductrice est monté un levier en rotation ainsi qu'un ressort agissant entre le corps et le bras arrière du levier. La base d'une électrode de soudage traversant un chapeau isolant surmontant l'extrémité du manchon isolant peut être serrée entre des gorges ménagées dans les extrémités avant du corps et du levier.

Toutefois, l'isolation de cette pince est loin d'être parfaite car le manchon isolant présente une ouverture pour le passage d'une poignée permettant d'agir sur le levier d'ouverture de la pince. Il existe donc un risque réel de pénétration par cette ouverture de poussières et d'humidité à l'intérieur de cette pince, susceptibles de provoquer à terme des courts-circuits, faisant que les opérateurs appréhendent d'utiliser une telle pince. De plus, le ressort étant situé à l'extrémité arrière du levier, le débattement de celui-ci est limité, ce qui constitue une gêne lorsque l'on souhaite installer une nouvelle électrode rapidement. On ne peut compenser ce défaut qu'en augmentant sensiblement le diamètre de la pince au détriment de sa maniabilité.

Le but de la présente invention est une pince du type précédemment cité qui soit électriquement et thermiquement parfaitement isolée. Il est de plus souhaitable que la réduction des dimensions externes puisse être optimisée pour une meilleure maniabilité, notamment pour atteindre des endroits difficiles d'accès. Enfin, cette pince doit pouvoir être réalisée et assemblée facilement pour réduire d'autant les coûts de fabrication.

Ce but est réalisé du fait que le manchon est en matériau souple et vient s'accoupler avec le chapeau lui-même en matériau synthétique thermodurcissable, le levier et la pièce conductrice étant entièrement recouverts par le manchon et le chapeau.

Ainsi, le levier de serrage est entièrement intégré dans le manche de la pince. En d'autres termes, ce manchon ne laisse sortir de la pince aucune partie saillante, sa poignée constituée de la pièce conductrice et du levier étant située à l'intérieur du manchon. La pince forme ainsi un corps homogène à travers duquel aucun corps étranger ne peut pénétrer et toucher les parties conductrices.

Avantageusement, le manchon présente, en correspondance avec le levier, une moulure longitudinale arrondie dont l'épaisseur peut être moindre que celle du manchon, cette moulure permettant de repérer aisément le levier, et assurant la facilité de mouvement de ce levier à l'intérieur de la pince tout en garantissant la parfaite isolation de l'opérateur.

Utilement, l'extrémité arrière du manchon souple, côté fil conducteur, comporte différents diamètres intérieurs sécables permettant un contact en friction entre la gaine du fil conducteur et le manchon souple. Ceci assure une isolation entre l'extrémité du fil et l'extérieur de la pince, et permet d'accepter des câbles de toutes sections.

Selon un mode de réalisation préféré, la pièce conductrice interne en laiton matricé présente un évidement longitudinal au niveau du bras arrière du levier permettant l'intégration complète de ce bras arrière constituant la poignée du levier de serrage de l'électrode, ainsi que du ressort de compression situé entre la pièce conductrice et ce levier. Cet évidement permet de plus un ample mouvement du levier actionné manuellement sans effort surhumain.

Pour l'obtention des résultats ci-dessus, la pièce conductrice est une pièce de fonderie matricée en laiton, sur la partie avant de laquelle pivote la branche d'un levier de serrage très peu coudé au-delà de son axe de pivotement et terminé par une manette intérieure intégrée entièrement dans un évidement creusé dans la pièce conductrice. Le levier peut donc être entièrement recouvert de matière isolante souple constituant en outre le manchon isolant allant du levier jusqu'à l'extrémité de la pince où vient s'insérer le fil conducteur. Il n'y a donc pas de contact possible entre un corps extérieur et la partie conductrice au niveau du levier.

Avantageusement, la pression du levier contre l'électrode s'effectue grâce à l'interposition d'un ressort de compression installé entre le levier et la pièce conductrice, et ce sensiblement au milieu du bras arrière du levier faisant office de manette. Utilement, le ressort est maintenu en place par deux tétons ou deux vis.

Utilement, le levier et la pièce conductrice sont reliés par une tresse en cuivre, par exemple fixée au niveau des extrémités du ressort, assurant une circulation homogène du courant dans toute la partie conductrice de la pince.

Un chapeau isolant dur en plastique thermodurcissable ignifugé vient coiffer la partie avant de la pince qui permet le serrage de l'électrode. Il se maintient sur le corps conducteur par deux tétons venant se placer dans deux trous sur le chapeau prévu à cet effet.

Utilement, le chapeau isolant peut être orienté par rotation de 180° autour de son axe et permet ainsi une modification de la pince en utilisation pour gaucher ou droitier. Utilement encore, le chapeau possède une ouverture en L empêchant la base de l'électrode de ressortir de la pince pour éviter tout risque d'électrocution pour l'utilisateur, et ce quelle que soit l'orientation donnée à cette électrode. L'autre extrémité du chapeau comprend à l'extérieur une crénelure transversale à trois gorges.

L'invention sera mieux comprise à l'étude d'un mode de réalisation illustré à l'aide de dessins annexés dans lesquels :
- la figure 1 est une vue d'ensemble de la pince montée,
- la figure 2 est une vue en coupe A-A longitudinale de la présente pince montée,
- la figure 3 est une vue en coupe du chapeau en plastique thermodurcissable ignifugé,
- la figure 4 est une vue en coupe A-A du manchon souple,
- la figure 5 est une vue longitudinale du levier de serrage intégré,
- la figure 6 est une vue en coupe A-A longitudinale du corps conducteur de la pince.

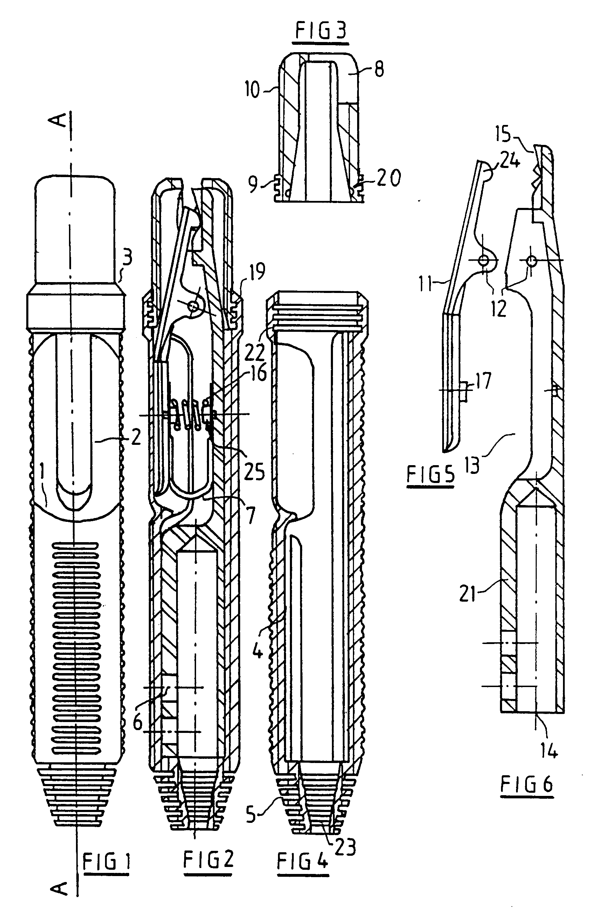

La pince selon l'invention comprend un chapeau 10, illustré sur la figure 3, en plastique thermodurcissable ignifugé, ce chapeau présentant un orifice 8 en L qui permet le passage des électrodes selon trois directions et empêche de les voir ressortir de l'autre côté du chapeau, évitant ainsi tout risque d'électrocution pour l'opérateur. Ce chapeau présente une crénelure transversale 9 à trois gorges, sur laquelle vient s'encastrer le manchon souple 4 représenté par la figure 4. Le chapeau présente en outre deux petits trous débouchants 20 permettant la fixation sur la pièce conductrice 21 représentée en coupe sur la figure 6.

Le manchon souple 4 illustré sur la figure 4 montre, en coupe, la crénelure 22 dans laquelle vient s'insérer le chapeau dur 10.

L'extrémité arrière (côté fil conducteur) de ce manchon présente des gorges transversales 5 sécables permettant une correspondance entre la gaine du fil conducteur non illustré et le diamètre intérieur 23 du manchon, et ce de manière à obtenir un contact en friction entre les deux.

Ce manchon possède une moulure 2 sur un plat 1, mieux visible sur les figures 1 et 4, qui assure une souplesse nécessaire à l'appui par la main de l'opérateur sur un levier interne 11 illustré sur la figure 5.

Ce manchon est enfilé par glissement frottant sur une pièce conductrice 21 illustrée sur la figure 6 qui montre le détail des gorges en V 15 en tête de mâchoire supportant l'électrode selon les directions choisies.

Cette figure 6 illustre la position d'un axe 12 transversal permettant la fixation et le pivotement d'un levier de la pince 11 représenté sur la figure 5.

Toujours sur cette figure 6, on peut constater la présence d'un évidement 13 de la pièce 21 permettant l'intégration du levier 11 de la pince. Lorsque l'opérateur appuie sur le levier 11 à travers le manchon souple, le manche du levier s'enfonce dans l'évidement du corps permettant l'ouverture de la pince.

La pièce conductrice 21 présente un trou borgne 14 dans lequel vient s'insérer l'extrémité dénudée d'un fil conducteur. La figure 2 montre en coupe deux filetages 6 dans la pièce conductrice permettant de placer deux vis sans tête assurant le serrage de cette extrémité dénudée du fil conducteur.

Le levier de la pince venant se fixer sur la pièce conductrice 21 est représenté sur la figure 5 et référencé par le numéro 11 .

Ce levier possède en tête de mâchoire un bossage 24 permettant l'appui de l'extrémité de l'électrode dans la gorge 15 en tête de mâchoire de la pièce. Ce levier pivote sur l'axe 12 et est raccordé à la pièce par une goupille dans l'exemple présenté de l'invention. Ce levier fait, au niveau de l'extrémité du manche arrière, un angle obtus qui lui permet de rester dans le prolongement de la pièce conductrice quelle que soit l'électrode engagée.

En regard de la branche longitudinale du levier, la pièce conductrice comprend à l'avant plusieurs gorges en V 15 pour permettre différentes positions angulaires de l'électrode par rapport à la pince : une gorge en V longitudinale pour électrode longitudinale, une gorge en V transversale pour électrode transversale, et une gorge oblique pour électrode oblique. On notera que toutes les valeurs de diamètre d'électrode sont acceptées.

Ce levier comporte une vis ou rivet 17 assurant le positionnement du ressort 16 de compression, et le maintien de la tresse d'isolement 7 présentée sur la figure 2.

La figure 2 illustre l'assemblage et le fonctionnement des différentes parties. Cette vue en coupe montre que l'ensemble composé du chapeau 10 avec le manchon 4 assure une parfaite isolation contre l'électrocution surtout au niveau des points 3 et 1 qui sont très sensibles.

La figure 2 montre comment le manche du levier 11 monté se termine juste en amont de la moulure 2 du manchon souple 4.

Le levier assemblé dans le corps conducteur maintient l'électrode grâce à un ressort de compression 16 maintenu d'une part par la vis ou rivet 17 de ce même levier et d'autre part par la vis ou rivet 25 de la pièce conductrice.

Le ressort maintient également une tresse 7 d'isolation contre les courts-circuits entre le levier et le corps conducteur.

L'assemblage des parties est le suivant.

On positionne sur la vis 25 de la pièce conductrice 21 la tresse 7, puis le ressort 16. Le levier 11 est placé de telle sorte à maintenir, au niveau de la vis 17, la tresse 7 et l'autre extrémité du ressort 16 ; et de telle sorte que son ce corresponde avec celui de la pièce afin d'assembler le tout à l'aide d'une goupille.

On crante ensuite le chapeau dur 10 sur la pièce conductrice 21 en faisant correspondre les trous débouchants (ou encoches) 20 du chapeau sur les petits bossages de la pièce 21 situés juste en arrière de l'axe 12. Il est possible de tourner le chapeau 10 thermodurcissable ignifugé de 180°, ce qui permet d'obtenir un usage de la pince pour gaucher ou droitier par inversion de la position de l'électrode par rapport au levier de serrage, et donc la main de l'opérateur.

Il reste à faire glisser le manchon souple 4 sur la pièce conductrice 21 jusqu'au chapeau dur 10. Il est nécessaire d'écarter le manchon pour venir s'encastrer dessus de telle sorte que les crénelures de manchon (ou encoches) 22 correspondent avec les crénelures (ou encoches) 9 du chapeau 10. La pince est ainsi assemblée.

La figure 1 montre l'absence de possibilité d'électrocution de l'opérateur. La moulure intégrée 2 dans le plat 1 du manchon 4 permet le maniement aisé du levier. Cette figure montre ainsi que la pince forme un corps unique et qu'aucune partie ne dépasse de ce corps. Il est ainsi possible de souder même en cas d'accès difficile vers l'endroit de la soudure.

## Revendications

1. Pince porte-électrode pour soudage à l'arc comprenant, à l'intérieur d'un manchon isolant (4) d'une seule pièce, une pièce conductrice interne (21) dont la partie arrière est destinée à recevoir un câble électrique d'amenée de courant, et sur laquelle est monté en rotation un levier (11) et un ressort (16) agissant entre le corps et le bras arrière du levier, la base d'une électrode de soudage traversant un chapeau isolant (10) surmontant l'extrémité du manchon isolant (4), la base de l'électrode pouvant être serrée entre des gorges (15) ménagées dans les extrémités avant de la pièce (21) et du levier (11), caractérisée en ce que le manchon (4) est en matériau souple et vient s'accoupler avec le chapeau (10) en matériau synthétique thermodurcissable, le levier (11) et la pièce conductrice (21) étant entièrement recouverts par le manchon (4) et le chapeau (10).

2. Pince porte-électrode selon la revendication 1, caractérisée en ce que le manchon (4) présente, en correspondance avec le levier (11), une moulure (2) longitudinale arrondie.

3. Pince porte-électrode selon la revendication 1, caractérisée en ce que l'extrémité arrière du manchon souple (4), côté fil conducteur, comporte différents diamètres intérieurs (23) sécables.

4. Pince porte-électrode selon la revendication 1, caractérisée en ce que la pièce conductrice (21) présente un évidement longitudinal (13) au niveau du bras arrière du levier (11).

5. Pince porte-électrode selon la revendication 1, caractérisée en ce que le ressort de compression (16), assurant la pression du levier (11) contre l'électrode, est installé entre le levier et la pièce conductrice, et ce sensiblement au milieu du bras arrière de ce levier.

6. Pince porte-électrode selon la revendication 1, caractérisée en ce que le chapeau isolant (10) peut être orienté par rotation de 180° autour de son axe.

7. Pince porte-électrode selon la revendication 1, caractérisée en ce que le chapeau isolant (10) possède une ouverture (8) en L.

8. Pince porte-électrode selon la revendication 1, caractérisée en ce que le levier (11) et la pièce conductrice (21) sont reliés par une tresse en cuivre (7).

## Claims

1. Electrode holder jaws usable for arc welding comprising, inside a one-piece insulating sleeve (4) an internal conducting member (21) whereof the rear part is intended to receive an electrical current supply cable and on which is rotatably mounted a lever (11) and a spring (16) acting between the body and the rear arm of the lever, the base of a welding electrode passing through an insulating cap (10) surmounting the end of the insulating sleeve (4), the base of the electrode being able to be gripped between grooves (15) provided in the front ends of the member (21) and of the lever (11), characterised in that the sleeve (4) is made of flexible material and is connected to the cap (10) of thermosetting synthetic material, the lever (11) and the conducting member (21) being completely covered by the sleeve (4) and the cap (10).

2. Electrode holder jaws according to Claim 1, characterised in that the sleeve (4) comprises, corresponding to the lever (11), a rounded longitudinal moulding (2).

3. Electrode holder jaws according to Claim 1, characterised in that the rear end of the flexible sleeve (4), adjacent the conductor-wire, comprises various sectile inner diameters (23).

4. Electrode holder jaws according to Claim 1, characterised in that the conducting member (21) has a longitudinal recess (13) at the level of the rear arm of the lever (11).

5. Electrode holder jaws according to Claim 1, characterised in that the compression spring (16), ensuring the pressure of the lever (11) against the electrode, is installed between the lever and the conducting member and this is substantially in the middle of the rear arm of this lever.

6. Electrode holder jaws according to Claim 1, characterised in that the insulating cap (10) may be oriented by rotation through 180° about its axis.

7. Electrode holder jaws according to Claim 1, characterised in that the insulating cap (10) has a L-shaped opening (8).

8. Electrode holder jaws according to Claim 1, characterised in that the lever (11) and the conducting member (21) are connected by a copper braid (7).

## Patentansprüche

1. Elektrodenhalter zum Lichtbogenschweißen, der im Inneren einer Isoliermuffe (4) aus einem einzigen Teil einen inneren leitenden Einsatz (21) aufweist, dessen hinterer Teil zur Aufnahme eines elektrischen Stromzuführungskabels bestimmt ist, und an dem drehbar ein Hebel (11) sowie eine zwischen dem Körper und dem hinteren Hebelarm wirkende Feder (16) angebracht sind, wobei die Basis einer Schweißelektrode eine über das Ende der Isoliermuffe (4) hinausgehende Isolierkappe (10) durchquert, wobei die Basis der Elektrode zwischen in den vorderen Enden des Einsatzes (21) und des Hebels (11) vorgesehenen Nuten eingespannt werden kann, dadurch gekennzeichnet, daß die Muffe (4) aus einem flexiblen Material besteht und mit der Kappe (10) aus warmhärtbarem Kunststoff gekoppelt wird, wobei der Hebel (11) und der leitende Einsatz (21) von der Muffe (4) und der Kappe (10) vollständig überdeckt ist.

2. Elektrodenhalter nach Anspruch 1, dadurch gekennzeichnet, daß die Muffe (4) in Entsprechung zu dem Hebel (11) eine gerundete Längskehle (2) aufweist.

3. Elektrodenhalter nach Anspruch 1, dadurch gekennzeichnet, daß das hintere Ende der flexiblen Muffe (4) leitungsdrahtseitig verschiedene teilbare Innendurchmesser (23) aufweist.

4. Elektrodenhalter nach Anspruch 1, dadurch gekennzeichnet, daß der leitende Einsatz (21) auf Höhe des hinteren Arms des Hebels (11) eine Längsaussparung (13) aufweist.

5. Elektrodenhalter nach Anspruch 1, dadurch gekennzeichnet, daß die Druckfeder (16), mit welcher der Hebel (11) gegen die Elektrode gepreßt wird, zwischen den Hebel und den leitenden Einsatz eingebaut ist, und zwar im wesentlichen in der Mitte des hinteren Arms dieses Hebels.

6. Elektrodenhalter nach Anspruch 1, dadurch gekennzeichnet, daß die Isolierkappe (10) durch Drehung um 180° um ihre Achse ausgerichtet werden kann.

7. Elektrodenhalter nach Anspruch 1, dadurch gekennzeichnet, daß die Isolierkappe (10) eine L-förmige Öffnung (8) besitzt.

8. Elektrodenhalter nach Anspruch 1, dadurch gekennzeichnet, daß der Hebel (11) und der leitende Einsatz (21) durch eine Kupferlitze (7) verbunden sind.
